# EUROPÄISCHE PATENTSCHRIFT

(11) **EP 2 531 043 B1**
(45) Veröffentlichungstag und Bekanntmachung des Hinweises auf die Patenterteilung: **28.08.2013**
(21) Anmeldenummer: 11701466.2
(22) Anmeldetag: 28.01.2011
(51) Int. Cl.: A23L 1/05, A23L 1/0524, A23L 2/02, A23L 2/38, A23L 2/39, A23L 1/054, A23L 1/30, A23L 2/52, A23D 7/005, A23D 7/01

(54) **GETRÄNK**
DRINK
BOISSON

(30) Priorität: 06.02.2010 EP 10001238
(43) Veröffentlichungstag der Anmeldung: 12.12.2012
(73) Patentinhaber: Cognis IP Management GmbH, 40589 Düsseldorf (DE)
(72) Erfinder: SCHWAIER, Bettina, 81541 München (DE); MÜLLER, Michael, 89165 Dietenheim (DE); HORLACHER, Peter, 89287 Bellenberg (DE); REITLINGER, Sandra, 89257 Illertissen / Au (DE); BECK, Katja, 89257 Illertissen/Au (DE)
(86) Internationale Anmeldenummer: PCT/EP2011/000401
(87) Internationale Veröffentlichungsnummer: WO 2011/095305

(56) Entgegenhaltungen:
- EP-A2- 2 002 726
- WO-A1-2005/102074
- WO-A1-2008/128765
- WO-A2-2007/066234
- JP-A- 2000 102 361
- US-A- 5 641 532
- US-A1- 2007 178 213
- US-B1- 6 576 285
- EINHORN-STOLL U ET AL: "MODIFIED PECTINS IN WHEY PROTEIN EMULSIONS", NAHRUNG - FOOD, VCH VERLAGSGESELLSCHAFT, WEINHEIM, XX LNKD- DOI:10.1002/FOOD.19960400203, Bd. 40, Nr. 2, 1. Januar 1996 (1996-01-01) , Seiten 60-67, XP000604246, ISSN: 0027-769X

## Beschreibung

Die vorliegende Erfindung betrifft ein Getränk, welches eine Öl-in-Wasser-Emulsion ist, und welches Hydrokolloide enthält, wobei die Hydrokolloide ein Gemisch aus Gellan und Pektin sind, und wobei die Öl- oder Fettphase Sterole oder Stanole oder Fettsäureester von Sterolen oder Fettsäureester von Stanolen oder ein Gemisch dieser Stoffe enthält. Die Hydrokolloide verhindern oder verlangsamen das Absetzen eines Niederschlags der Öl- oder Fettphase der Öl-in-Wasser-Emulsion.

Es ist bekannt dass Hydrokolloide wie Pektin, Gellan, Carboxymehtylcellulose (CMC) etc. zur Stabilisierung von Getränken eingesetzt werden, das heißt zur Verhinderung oder Verlangsamung des Absetzens von Partikeln in Getränken eingesetzt werden. Die Partikel sind dabei z.B. Partikel aus Fruchtpulpe oder Fruchtfleisch, die sich ohne Stabilisierung im Getränk absetzen würden. Diese Stabilisierung wird hauptsächlich durch die Erhöhung der Viskosität der Getränke durch die hierbei verwendeten, viskositätserhöhenden, Hydrokolloide erreicht.

Das Aufrahmen von Partikeln in Getränken wird durch den Zusatz von Hilfsstoffen wie Emulgatoren oder so genannten "weighting agents" verhindert. Dies ist ebenfalls aus dem Stand der Technik bekannt. Die so genannten "weighting agents" führen zu einem Angleichen der Dichte der in den Getränken suspendierten Partikel und der sie umgebenden, kontinuierlichen, flüssigen Phase. Die "weighting agents" erhöhen dabei z. B. die Dichte von Öl- oder Fettpartikeln, die in wässriger Phase dispergiert sind, damit die Öl- oder Fettpartikel nicht mehr aufrahmen.

Es besteht das Bedürfnis, in Getränken, welche Öl-in-Wasser-Emulsionen sind, wobei die Öl- oder Fettphase eine höhere Dichte hat als die wässrige Phase, und wobei die Öl- oder Fettphase Sterole oder Stanole oder Fettsäureester von Sterolen oder Fettsäureester von Stanolen oder ein Gemisch dieser Stoffe enthält, das Absetzen eines Niederschlags zu verlangsamen oder zu verhindern.

US 6627245 offenbart stabile, homogene, emulgatorfreie Suspensionen von hydrophoben Substanzen, die einen Verdicker enthalten, wobei als Verdicker unter anderem Pektin und Gellan genannt werden. Dabei wird der Verdicker bevorzugt in einer solchen Konzentration eingesetzt, dass die Viskosität der Suspension mindestens 50 mPas beträgt. Unterhalb dieser Viskosität sind die Suspensionen nicht stabil. Derartig hochviskose Suspensionen sind für viele Getränkeanwendungen ungeeignet, weil sie nicht die Erwartung des Verbrauchers an die Viskosität eines Getränkes erfüllen.

Es besteht also weiterhin das Bedürfnis, in den genannten Getränken das Absetzen eines Niederschlags zu verlangsamen oder zu verhindern ohne dass dafür die Viskosität der Getränke erheblich, zum Beispiel auf 50 mPas oder größer, erhöht werden muss.

WO 2005/102074 offenbart in Beispiel A ein Getränk, welches eine Proteinsuspension ist, die durch Pektin stabilisiert ist.

US 5641532 offenbart in Beispiel 1 ein Getränk, das eine Öl-in-Wasser Emulsion ist, die mit Gellan stabilisiert ist.

US 2007/0178213 offenbart aufgeschlagene Milchprodukte, die unter anderem Gellan enthalten.

WO 2008/128765 offenbart ein CLA-haltiges Yoghurtgetränk, das Pektin enthält.

WO 2007/066234 offenbart ein Getränk, das eine Emulsion ist, die mit Pektin stabilisiert ist.

In Nahrung, Band 40, Seiten 60 - 67 (1996**)** werden Molkeprotein-Emulsionen offenbart, die modifizierte Pektine enthalten.

US 7 147 885 offenbart in Anspruch 8 einen Dispersions-Stabilisator enthaltend isoliertes acetyliertes Gellan und Pektin.

US 6576285 B1 offenbart ein Getränk und eine Emulsion zur Getränkeherstellung sowie deren Herstellmethoden. Ziel ist die Bereitstellung und Abgabe von spezifischen Tagesdosen an Sterol- oder Stannol-Estern. Die Wasserphase der Emulsion enthält wenigstens einen wasserlöslichen Emulgator wie belspielsweise Pectin. Gellan ist nicht offenbart. Zusammensetzungen gemäß Anspruch 1 sind ebenfalls nicht offenbart.

Aufgabe der vorliegenden Erfindung ist es, ein Getränk bereit zu stellen, welches eine Öl-in-Wasser-Emulsion ist, bei der eine Öl- oder Fettphase in einer Wasserphase dispergiert ist, und bei welchem die Öl- oder Fettphase eine höhere Dichte hat als die Wasserphase, und wobei die Öl- oder Fettphase Sterole oder Stanole oder Fettsäureester von Sterolen oder Fettsäureester von Stanolen oder ein Gemisch dieser Stoffe enthält, wobei das Absetzen eines Niederschlags von Öl- oder Fettpartikeln in dem Getränk verhindert oder zumindest verlangsamt oder im Ausmaß reduziert werden soll, ohne dass dazu zwingend Emulgatoren oder weighting agents verwendet werden müssen. Dabei soll die sensorische Qualität des Getränks, das so genannte Mundgefühl, durch die Maßnahme, die ergriffen wird, um das Absetzen von Öl- oder Fettpartikeln in dem Getränk zu verhindern oder zumindest zu verlangsamen oder im Ausmaß zu reduzieren, nicht oder zumindest nicht erheblich beeinträchtigt werden. Außerdem soll es möglich sein, die Viskosität des Getränkes auf einen möglichst niedrigen Wert, z. B. auf weniger als 50 mPas, einzustellen, und trotzdem die gewünschte Reduktion des Absetzens zu erreichen.

Diese Aufgabe wird gelöst durch das Getränk, welches in den Ansprüchen der vorliegenden Schrift definiert wird. Dieses Getränk ist ein Gegenstand der vorliegenden Erfindung.

Dabei ist es ein wesentliches Element der vorliegenden Erfindung, dass als Hydrokolloid ein Gemisch aus Gellan und Pektin eingesetzt wird. Die Verwendung von Gellan allein oder die Verwendung von Pektin allein ermöglicht es in vielen Fällen nicht, eine stabile Emulsion zu erhalten, außer es wird Gellan oder Pektin in einer so hohen Menge eingesetzt, dass die Viskosität der Emulsion unerwünscht hoch wird (siehe hierzu US 6627245). Die Verwendung der erfindungsgemäßen Mischung aus Gellan und Pektin ermöglicht es, stabile Emulsionen zu erhalten, ohne dass die Viskosität der Emulsion unerwünscht hoch sein muss.

Ein weiterer Gegenstand der vorliegenden Erfindung ist ein Fettpulver, welches, als Zwischenprodukt, zur Herstellung des erfindungsgemäßen Getränks dienen kann. Das erfindungsgemäße Fettpulver wird in den Ansprüchen der vorliegenden Schrift definiert.

Ein weiterer Gegenstand der vorliegenden Erfindung ist eine Emulsion, welche, als Zwischenprodukt, zur Herstellung des erfindungsgemäßen Getränks dienen kann. Die erfindungsgemäße Emulsion wird in den Ansprüchen der vorliegenden Schrift definiert.

Ein weiterer Gegenstand der vorliegenden Erfindung ist ein Verfahren zur Herstellung des erfindungsgemäßen Getränks aus dem erfindungsgemäßen Fettpulver.

Ein weiterer Gegenstand der vorliegenden Erfindung ist ein Verfahren zur Herstellung des erfindungsgemäßen Getränks aus der erfindungsgemäßen Emulsion.

Ein weiterer Gegenstand der vorliegenden Erfindung ist die Verwendung eines Hydrokolloids zur Verlangsamung oder zur Verhinderung des Absetzens der Öl- oder Fettphase in einem Getränk, welches eine Öl-in-Wasser-Emulsion ist, wobei das Getränk und die Öl- oder Fettphase bevorzugt ein solches Getränk und eine solche Öl- oder Fettphase sind wie dies in der vorliegenden Schrift als erfindungsgemäß definiert ist.

Überraschenderweise wurde gefunden, dass sich Fettpulver, welche Hydrokolloide enthalten und in einer wässrigen Phase dispergiert werden, so dass wässrige Phase und Fettpulver zusammen ein Getränk ergeben, wobei das Getränk und die Fettpulver solche sind wie in den Ansprüchen der vorliegenden Schrift definiert, in diesem Getränk nur sehr verzögert oder gar nicht absetzen. Dabei ist es möglich, durch die Auswahl geeigneter Hydrokolloide, nämlich eines Gemisches aus Gellan und Pektin, zu bewirken, dass die Viskosität des Getränkes nicht signifikant erhöht wird. Dies kann von Vorteil sein, weil eine zu hohe Viskosität die Akzeptanz eines Getränks beim Verbraucher in bestimmten Fällen herabsetzen kann.

Statt der Fettpulver kann auch ein Öl in einer wässrigen Phase emulgiert sein, wobei die so erhaltene Emulsion ein Hydrokolloid enthält, wobei das Getränk und das Öl solche sind wie in den Ansprüchen der vorliegenden Schrift definiert. Auch hierbei wird ein Getränk erhalten, in welchem sich das Öl nur sehr verzögert oder gar nicht absetzt. Auch hierbei ist es möglich, durch die Auswahl geeigneter Hydrokolloide, nämlich eines Gemisches aus Gellan und Pektin, zu bewirken, dass die Viskosität des Getränkes nicht signifikant erhöht wird. Dies kann von Vorteil sein, weil eine zu hohe Viskosität die Akzeptanz eines Getränks beim Verbraucher in bestimmten Fällen herabsetzen kann.

Bei den erfindungsgemäßen Getränken handelt es sich um Öl-in-Wasser-Emulsionen. Dabei ist eine unpolare Öl- oder Fettphase in einer polaren Wasserphase emulgiert bzw. suspendiert

Als Öl- oder Fettphase kommen beliebige, für Getränke geeignete Öle und/oder Fette in Betracht, sofern sie Sterole oder Stanole oder Fettsäureester von Sterolen oder Fettsäureester von Stanolen oder ein Gemisch dieser Stoffe enthalten. Bevorzugt haben die Öle oder Fette eine Dichte von mehr als 1 kg/l, bevorzugt von mehr als 1,02 kg/l, insbesondere von mehr als 1,05 kg/l. Unter Fetten werden Stoffe verstanden, die bei 20°C fest sind, unter Ölen werden Stoffe verstanden, die bei 20 °C flüssig sind.

Als Fettsäuren in den Fettsäureester von Sterolen oder Fettsäureester von Stanolen kommen beliebige Fettsäuren in Betracht, insbesondere solche mit 6 bis 20, insbesondere solche mit 10 bis 18 C-Atomen.

Die Öle oder Fette können weiterhin neben den eigentlichen Ölen oder Fetten insbesondere enthalten: Carotinoide, fettlösliche Vitamine wie Vitamin A, D, E, K oder deren Derivate und Phospholipide.

In einer Ausführungsform der Erfindung werden solche Hydrokolloide eingesetzt, welche die Viskosität des erfindungsgemäßen Getränkes nicht oder nicht signifikant erhöhen. Eine nicht signifikante Erhöhung liegt vor, wenn die Viskosität des Getränkes bei 20°C und einem Hydrokolloidgehalt von 1 Gew.-% in dem Getränk nicht um mehr als 30 %, bevorzugt nicht um mehr als 20 %, insbesondere nicht um mehr als 10 % erhöht wird verglichen mit dem Getränk ohne Hydrokolloid.

In einer besonderen Ausführungsform enthält das erfindungsgemäße Getränk bezogen auf 100 Gewichtsteile wässrige Phase, 0,01 bis 10 Gewichtsteile Öl- oder Fettphase, insbesondere 0,025 - 5 Gewichtsteile Öl- oder Fettphase und 0,001 bis 5 Gewichtsteile Hydrokolloid, insbesondere 0,05 bis 1 Gewichtsteile Hydrokolloid.

Die vorliegende Erfindung hat zahlreiche Vorteile. Das Getränk hat einen neutralen Geschmack und es weist kein öliges, fettiges Mundgefühl auf. Zur Verhinderung oder Verzögerung des Absetzens eines Niederschlags werden für Fettpulver bzw. Emulsionen keine weiteren Emulgatoren benötigt, wenn die erfindungsgemäßen Hydrokolloide eingesetzt werden. Zur Stabilisierung des Getränkes sind keine zusätzlichen technologischen Maßnahmen, wie z.B. Homogenisierung, notwendig.

In der vorliegenden Schrift bedeuten im Folgenden alle %-Angaben Gew.-%, außer wenn etwas anderes definiert wird.

In einer Ausführungsform hat das erfindungsgemäße Fettpulver einen Fettgehalt von 20 - 80 %. In einer Ausführungsform hat das erfindungsgemäße Fettpulver einen Hydrokolloidgehalt von 5 - 40 %. In einer Ausführungsform hat das erfindungsgemäße Fettpulver einen Gehalt an Trägerstoffen von 15 - 75 %. In einer Ausführungsform hat das erfindungsgemäße Fettpulver einen Wassergehalt von maximal 8 %.

Die erfindungsgemäßen Fettpulver können durch Sprühtrocknung oder durch andere Trocknungsverfahren oder durch Abmischung hergestellt werden.

In einer Ausführungsform hat die erfindungsgemäße Emulsion zur Herstellung des erfindungsgemäßen Getränks einen Fettgehalt von 20 - 60 %. In einer Ausführungsform hat die erfindungsgemäße Emulsion zur Herstellung des erfindungsgemäßen Getränks einen Hydrokolloidgehalt von 2 -10 %. In einer Ausführungsform hat die erfindungsgemäße Emulsion zur Herstellung des erfindungsgemäßen Getränks einen Emulgatorgehalt von 0,5 - 5 %. In einer Ausführungsform hat die erfindungsgemäße Emulsion zur Herstellung des erfindungsgemäßen Getränks einen Wassergehalt von 38 - 78 %.

Als Trägerstoffe kommen erfindungsgemäß insbesondere in Betracht: Milcheiweiß, Sojaeiweiß, Gummi arabicum, modifizierte Stärke, z.B. Succinatstärke (E 1450). Trägerstoffe können dazu dienen, das Fett in der Wasserphase vor dem Sprühtrocknen zu emulgieren und später im Pulverzustand dazu, das Fett zu umschließen.

Erfindungsgemäß können auch Emulgatoren eingesetzt werden. Als Emulgatoren kommen erfindungsgemäß in Betracht: Monoglyceride von Fettsäuren und deren Ester, Lecithine, Zuckerester, Polysorbate, Polyglycerinester. Auch die genannten Trägerstoffe können zum Teil eine emulgierende Wirkung haben, so dass zum Teil auf den Zusatz von Emulgatoren verzichtet werden kann.

Emulsionsgetränke können aus folgenden Zutaten hergestellt werden aus: Getränkegrundstoff, einerfindungsgemäßes Fettpulver oder eine erfindungsgemäße Emulsion, Wasser, sonstige Zusatzstoffe.

Unter Getränkegrundstoff wird erfindungsgemäß ein Halbfertigfabrikat verstanden, welches in der Regel bis auf Wasser, Zucker und Säure alle Inhaltsstoffe die zur Herstellung eines standardisierten Getränkes notwendig sind, wie z. B. Fruchtsaft oder Fruchtsaftkonzentrat, Süßungskomponente (z. B. Zucker oder Süßstoff), Aromen, färbende Fruchtextrakte oder Pflanzenextrakte, Antioxidantien, Vitamine etc. enthält.

Als sonstige Zusatzstoffe kommen erfindungsgemäß in Betracht: Antioxidantien, Farbstoffe, Fruchtextrakte, Pflanzenextrakte, Aromastoffe.

### Beispiele

In der vorliegenden Schrift bedeuten alle %-Angaben Gew.-%, außer wenn etwas anderes definiert wird.

Die im Folgenden verwendeten Marken bezeichnen die im Folgenden definierten Produkte und sind über die angegebenen Bezugsquellen erhältlich.
- Vegapure^{®} FTE enthält Phytosterole; Bezugsquelle: Cognis GmbH, Monheim, Deutschland
- Vegapure^{®} F 40 WDPE enthält Phytosterole; Bezugsquelle: Cognis GmbH, Monheim, Deutschland
- Kelcogel^{®} PS ist ein Gemisch aus Saccharose, Gellan (E 418) und Pektin; Bezugsquelle: CP Kelco Germany GmbH, Großenbrode, Deutschland
- Als Gummi arabicum wurde das Handelsprodukt Quick-Gum Type 8074 verwendet; erhältlich von ALFRED L. WOLFF GmbH, Hamburg, Deutschland
- Als Pektin (E 440) wurde das Handelsprodukt Genu Pectin VIS verwendet, erhältlich von CP Kelco Germany GmbH, Großenbrode, Deutschland. Dabei handelt es sich um ein Pektin, das mit Saccharose standardisiert ist; dabei bedeutet standardisiert, dass das Pektin mit Saccharose auf einen bestimmten Viskositätswert eingestellt wird, damit trotz schwankender Rohstoffqualitäten (erntebedingt) keine Änderung im Endprodukt vorkommt.
- Kelcogel^{®} F ist ein Gellan (E 418); Bezugsquelle: CP Kelco Germany GmbH, Großenbrode, Deutschland

### Beispiel 1:

### Rezeptur eines Fettpulvers mit Hydrokolloiden

32 % Vegapure^{®} FTE (Öl- oder Fettphase)
48 % Gummi arabicum (Hydrokolloid)
20 % Kelcogel^{®} PS

### Herstellung eines Fettpulvers mit Hydrokolloiden mit oben stehender Rezeptur

Das Gummi Arabicum und das Kelcogel^{®} PS wurden bei 20°C in Wasser eingerührt. Es wurden 65 Gewichtsteile Wasser bezogen auf 35 Gewichtsteile der oben stehenden Rezeptur verwendet. Die erhaltene Dispersion wurde auf 65 - 70 °C erwärmt. Anschließend wurde Vegapure^{®} FTE unter starkem rühren in diese erste Dispersion (Wasserphase) dispergiert. Die so erhaltene Dispersion wurde zweistufig homogenisiert (mit den Druckeinstellungen 220/30 bar im Homogenisator). Die Sprühtrocknung wurde mit einer Zerstäuberscheibe bei 24000 Umdrehungen pro Minute und bei einer Zulufttemperatur von 185 °C durchgeführt.

Die Herstellung des Fettpulvers kann durch Sprühtrocknung oder durch andere Trocknungsverfahren oder durch Abmischung hergestellt werden.

### Beispiel 2:

### Rezeptur eines Emulsionsgetränks

1,04 % Fettpulver mit Hydrokolloiden nach Beispiel 1
92,46 % Wasser
6,5 % Getränkegrundstoff (Orange-Karotte-Zitrone von der Firma Rudolf Wild GmbH & Co. KG, Eppelheim/Heidelberg, Typ 35000080660000)

### Herstellung eines Emulsionsgetränks mit Hydrokolloiden mit oben stehender Rezeptur

Die drei Komponenten wurden gemischt und pasteurisiert (mindestens 85°C für 30 Sekunden). Anschließend wurden die so erhaltenen Emulsionsgetränke abgefüllt.

### Beispiel 3:

**In diesem Beispiel getestete Rezepturen für Emulsionsgetränke:**

| **Rezeptur** | **SR 1702** | **SR 1703** | **SR 1704** | **SR 1705** | **SR 1707** | **SR 1708** | **SR 1709** |
|---|---|---|---|---|---|---|---|
| Wasser | 99.13 % | 98.88 % | 98.83 % | 99.11 % | 97.63 % | 97.33 % | 97.13 % |
| Vegapure F 40 WDP E | 0.87% | 0.87 % | 0.87 % | 0.87 % | 0.87% | 0.87 % | 0.87% |
| Kelcogel PS | | 0.25 % | 0.3 % | | | | |
| Kelcogel F | | | | 0.02% | | | |
| Genu Pectin VIS | | | | | 1.5 % | 1.8% | 2.0% |

SR 1702 ist eine Vergleichsrezeptur ohne Hydrokolloid.

### Herstellung von Emulsionsgetränken mit den Rezepturen mit Hydrokolloiden mit oben stehender Rezeptur SR 1702, SR 1703, SR 1704, SR 1705, SR 1707, SR 1708 und SR 1709

Die Trockenstoffe wurden unter Rühren in Wasser eingerührt. Diese Mischung wurde für 10 min kontinuierlich leicht gerührt. Im Anschluss daran wurde die Mischung auf 85 °C für 30 sec erwärmt, heiß in Flaschen abgefüllt und danach auf Raumtemperatur abgekühlt. Die Flaschen mit Emulsionsgetränk wurden stehend und liegend gelagert. Wenn es zu einer Sedimentation kam, war dies an den liegenden Proben schneller ersichtlich.

### Bewertung der Getränke nach Beispiel 3

Bei den Rezepturen SR 1703, SR 1704 und SR 1709 war auch nach 8 Wochen Lagerung kein Absetzen des Fettpulvers sichtbar. Bei dem Vergleichsbeispiel SR 1702 war eine starke Sedimentation bereits nach 2 Stunden sichtbar. Bei den Rezepturen SR 1705, SR 1707 und 1708 war eine Sedimentation nach 1 Tag sichtbar.

### Sensorische Beurteilung nach 4 Tagen Lagerung

| **Rezeptur** | **SR 1702** | **SR 1703** | **SR 1704** | **SR 1705** | **SR 1707** | **SR 1709** | **SR 1709** |
|---|---|---|---|---|---|---|---|
| **Geschmack** | | | | | | | |
| modrig (muffig) | 0 | 0 | 0,67 | 0,67 | 1,17 | 1,50 | 1,50 |
| sandig | 0,17 | 0,33 | 0,50 | 0,33 | 0,00 | 0,00 | 0,00 |
| kreidig | 0,50 | 0,17 | 0,50 | 0,33 | 0,17 | 0,17 | 0,17 |
| bitter | 0,17 | 0,33 | 0,33 | 0,83 | 0,33 | 0,33 | 0,33 |
| fremd | 0 | 0,83 | 1,33 | 2,17 | 2,00 | 2,50 | 2,50 |
| Mundgefühl | 0,17 | 1,00 | 1,67 | 1,33 | 2,50 | 2,83 | 2,83 |
| | | | | | | | |
| akzeptiert | 3 | 3 | 3 | 0 | 0 | 0 | 0 |
| nicht akzeptiert | 0 | 0 | 0 | 3 | 3 | 3 | 3 |

### Bewertung:

0 = kein Geschmack, nicht erkennbar
1 = leichte Abweichung, leichter Geschmack
2 = starke Abweichung, starker Geschmack
3 = sehr starke Abweichung, sehr starker Geschmack

Sensorisch wurden die erfindungsgemäßen Rezepturen SR 1703 und SR 1704 bevorzugt.

## Patentansprüche

1. Ein Getränk, das eine Öl-in-Wasser-Emulsion ist,
enthaltend eine wässrige Phase,
eine Öl- oder Fettphase, die in der wässrigen Phase dispergiert ist, und
mindestens ein Hydrokolloid,
wobei die Öl- oder Fettphase eine höhere Dichte hat als die wässrige Phase,
und wobei das Hydrokolloid ein Gemisch aus Gellan und Pektin ist,
und wobei die Öl- oder Fettphase Sterole oder Stanole oder Fettsäureester von Sterolen oder Fettsäureester von Stanolen oder ein Gemisch dieser Stoffe enthält.

2. Das Getränk nach Anspruch 1, wobei dieses Getränk, bezogen auf 100 Gewichtsteile wässrige Phase, enthält
0,01 bis 10 Gewichtsteile Öl- oder Fettphase und
0,001 bis 5 Gewichtsteile Hydrokolloid,
und wobei die Viskosität des Getränks bei 23°C bevorzugt nicht höher als 50 mPas, insbesondere bevorzugt nicht höher als 40 mPas, insbesondere bevorzugt nicht höher als 30 mPas, insbesondere bevorzugt nicht höher als 20 mPas ist, jeweils gemessen mit einem Rotationsviskosimeter vom Typ Bohlin C-VOR bei 23°C und den Parametern 1200 U/s, PP40 ("Platte Platte 40 mm") und 0,3 mm Spalt.

3. Das Getränk nach einem der vorhergehenden Ansprüche, wobei das Hydrokolloid eine Mischung aus Gellan und Pektin im Massenverhältnis 1:10 bis 10:1, ist.

4. Das Getränk nach einem der vorhergehenden Ansprüche, wobei die Öl- oder Fettphase mindestens 75 Gew.-%, bevorzugt mindestens 90 Gew.-%, bevorzugt mindestens 95 Gew.-%, insbesondre mindestens 98 Gew.-%, Sterole oder Stanole oder Fettsäureester von Sterolen oder Fettsäureester von Stanolen oder ein Gemisch dieser Stoffe enthält.

5. Das Getränk nach einem der vorhergehenden Ansprüche, wobei die Sterole oder Stanole oder Fettsäureester von Sterolen oder Fettsäureester von Stanolen Phytosterole oder Phytostanole oder Fettsäureester von Phytosterolen oder Fettsäureester von Phytostanolen sind.

6. Das Getränk nach einem der vorhergehenden Ansprüche, wobei die Öl- oder Fettphase Phytosterole oder Fettsäureester von Phytosterolen enthält.

7. Das Getränk nach einem der vorhergehenden Ansprüche, wobei das Getränk weiterhin enthält
Aromastoffe und/oder
Süßstoffe und/oder
Zucker und/oder
Farbstoffe und/oder
Antioxidantien und/oder
Pflanzenextrakte und/oder
Fruchtextrakte.

8. Das Getränk nach einem der vorhergehenden Ansprüche, wobei das Getränk weniger als 0,1 Gew.-% Proteine enthält, und bevorzugt keine Proteine enthält.

9. Das Getränk nach einem der vorhergehenden Ansprüche, wobei das Getränk weniger als 0,1 Gew.-% Emulgatoren enthält, und bevorzugt keine Emulgatoren enthält.

10. Ein Fettpulver zur Herstellung des Getränks wie definiert in einem der vorangehenden Ansprüche, wobei das Fettpulver umfasst
die Öl- oder Fettphase und
das Hydrokolloid.

11. Eine Emulsion zur Herstellung des erfindungsgemäßen Getränks wie definiert in einem der vorangehenden Ansprüche, wobei die Emulsion umfasst
die Öl- oder Fettphase, das Hydrokolloid und
einen Teil (bevorzugt höchstens 30 %, insbesondere höchstens 15 %) der wässrigen Phase des erfindungsgemäßen Getränks.

12. Ein Verfahren zur Herstellung des erfindungsgemäßen Getränks aus dem erfindungsgemäßen Fettpulver wie definiert in Anspruch 10 umfassend
das Dispergieren des Fettpulvers in der wässrigen Phase des Getränks.

13. Ein Verfahren zur Herstellung des erfindungsgemäßen Getränks aus der erfindungsgemäßen Emulsion wie definiert in Anspruch 11 umfassend
das Zusammenbringen der Emulsion mit der noch fehlenden wässrigen Phase.

14. Die Verwendung eines Hydrokolloids, das ein Gemisch aus Gellan und Pektin ist, zur Verlangsamung oder zur Verhinderung des Absetzens eines Niederschlages der Öl- oder Fettphase in einem Getränk, welches eine Öl-in-Wasser-Emulsion ist, wobei das Getränk und die Öl- oder Fettphase bevorzugt ein solches Getränk und eine solche Öl- oder Fettphase sind wie dies in einem der vorangehenden Ansprüche definiert ist.

15. Die Verwendung nach Anspruch 14, wobei das Hydrokolloid eine Mischung aus Gellan und Pektin im Massenverhältnis 1:10 bis 10:1 ist.

## Claims

1. A drink which is an oil-in-water emulsion,
comprising an aqueous phase,
an oil phase or fat phase which is dispersed in the aqueous phase, and
at least one hydrocolloid,
where the oil phase or fat phase has a higher density than the aqueous phase,
and where the hydrocolloid is a mixture of gellan and pectin,
and where the oil phase or fat phase comprises sterols or stanols or fatty acid esters of sterols or fatty acid esters of stanols or a mixture of these substances.

2. The drink according to claim 1, where this drink comprises, based on 100 parts by weight of aqueous phase,
0.01 to 10 parts by weight of oil phase or fat phase and
0.001 to 5 parts by weight of hydrocolloid,
and where the viscosity of the drink at 23°C is preferably not higher than 50 mPas, particularly preferably not higher than 40 mPas, particularly preferably not higher than 30 mPas, particularly preferably not higher than 20 mPas, in each case measured using a rotary viscometer of the Bohlin C-VOR type at 23°C and the parameters 1200 rpm, PP40 ("plate plate 40 mm") and 0.3 mm gap.

3. The drink according to one of the preceding claims, where the hydrocolloid is a mixture of gellan and pectin in the mass ratio 1:10 to 10:1.

4. The drink according to one of the preceding claims, where the oil phase or fat phase comprises at least 75% by weight, preferably at least 90% by weight, preferably at least 95% by weight, in particular at least 98% by weight, of sterols or stanols or fatty acid esters of sterols or fatty acid esters of stanols or a mixture of these substances.

5. The drink according to any one of the preceding claims, where the sterols or stanols or fatty acid esters of sterols or fatty acid esters of stanols are phytosterols or phytostanols or fatty acid esters of phytosterols or fatty acid esters of phytostanols.

6. The drink according to any one of the preceding claims, where the oil phase or fat phase comprises phytosterols or fatty acid esters of phytosterols.

7. The drink according to any one of the preceding claims, where the drink further comprises
aroma substances and/or
sweeteners and/or
sugars and/or
dyes and/or
antioxidants and/or
plant extracts and/or
fruit extracts.

8. The drink according to any one of the preceding claims, where the drink comprises less than 0.1% by weight of proteins, and preferably comprises no proteins.

9. The drink according to any one of the preceding claims, where the drink comprises less than 0.1% by weight of emulsifiers, and preferably comprises no emulsifiers.

10. A fat powder for producing the drink as defined in any one of the preceding claims, where the fat powder comprises
the oil phase or fat phase and
the hydrocolloid.

11. An emulsion for producing the drink according to the invention as defined in any one of the preceding claims, where the emulsion comprises the oil phase or fat phase, the hydrocolloid and some (preferably at most 30%, in particular at most 15%) of the aqueous phase of the drink according to the invention.

12. A method for producing the drink according to the invention from the fat powder according to the invention as defined in claim 10, comprising the dispersion of the fat powder in the aqueous phase of the drink.

13. A method for producing the drink according to the invention from the emulsion according to the invention as defined in claim 11, comprising the bringing together of the emulsion with the as yet lacking aqueous phase.

14. The use of a hydrocolloid, which is a mixture of gellan and pectin, for retarding or for preventing the settling of a precipitate of the oil phase or fat phase in a drink, which is an oil-in-water emulsion, where the drink and the oil phase or fat phase are preferably a drink and an oil phase or fat phase as defined in one the preceding claims.

15. The use according to claim 14, where the hydrocolloid is a mixture of gellan and pectin in the mass ratio 1:10 to 10:1.

## Revendications

1. Boisson, qui est une émulsion huile dans eau, contenant une phase aqueuse,
une phase huile ou matière grasse, qui est dispersée dans la phase aqueuse, et
au moins un hydrocolloïde,
la phase huile ou matière grasse ayant une densité plus élevée que la phase aqueuse,
et l'hydrocolloïde étant un mélange de gellane et de pectine,
et la phase huile ou matière grasse contenant des stérols ou des stanols ou des esters d'acides gras de stérols ou des esters d'acides gras de stanols ou un mélange de ces substances.

2. Boisson selon la revendication 1, dans laquelle cette boisson contient, par rapport à 100 parties en poids de phase aqueuse :
0,01 à 10 parties en poids de phase huile ou matière grasse, et
0,001 à 5 parties en poids d'hydrocolloïde,
la viscosité de la boisson à 23°C n'étant de préférence pas supérieure à 50 mPas, de manière particulièrement préférée pas supérieure à 40 mPas, de manière particulièrement préférée pas supérieure à 30 mPas, de manière particulièrement préférée pas supérieure à 20 mPas, à chaque fois mesurée avec un viscosimètre rotatif de type Bohlin C-VOR à 23°C et avec les paramètres 1 200 tours/s, PP40 (« plaque plaque 40 mm ») et fente de 0,3 mm.

3. Boisson selon l'une quelconque des revendications précédentes, dans laquelle l'hydrocolloïde est un mélange de gellane et de pectine en un rapport en masse de 1:10 à 10:1.

4. Boisson selon l'une quelconque des revendications précédentes, dans laquelle la phase huile ou matière grasse contient au moins 75 % en poids, de préférence au moins 90 % en poids, de préférence au moins 95 % en poids, notamment au moins 98 % en poids, de stérols ou de stanols ou d'esters d'acides gras de stérols ou d'esters d'acides gras de stanols ou un mélange de ces substances.

5. Boisson selon l'une quelconque des revendications précédentes, dans laquelle les stérols ou les stanols ou les esters d'acides gras de stérols ou les esters d'acides gras de stanols sont des phytostérols ou des phytostanols ou des esters d'acides gras de phytostérols ou des esters d'acides gras de phytostanols.

6. Boisson selon l'une quelconque des revendications précédentes, dans laquelle la phase huile ou matière grasse contient des phytostérols ou des esters d'acides gras de phytostérols.

7. Boisson selon l'une quelconque des revendications précédentes, dans laquelle la boisson contient également
des arômes et/ou
des édulcorants et/ou
des sucres et/ou
des colorants et/ou
des antioxydants et/ou
des extraits de plantes et/ou
des extraits de fruits.

8. Boisson selon l'une quelconque des revendications précédentes, dans laquelle la boisson contient moins de 0,1 % en poids de protéines, et de préférence ne contient pas de protéines.

9. Boisson selon l'une quelconque des revendications précédentes, dans laquelle la boisson contient moins de 0,1 % en poids d'émulsifiants, et de préférence ne contient pas d'émulsifiants.

10. Poudre grasse pour la fabrication de la boisson telle que définie dans l'une quelconque des revendications précédentes, dans laquelle la poudre grasse comprend
la phase huile ou matière grasse et
l'hydrocolloïde.

11. Émulsion pour la fabrication de la boisson selon l'invention telle que définie dans l'une quelconque des revendications précédentes, dans laquelle l'émulsion comprend
la phase huile ou matière grasse, l'hydrocolloïde, et une partie (de préférence au plus 30 %, notamment au plus 15 %) de la phase aqueuse de la boisson selon l'invention.

12. Procédé de fabrication de la boisson selon l'invention à partir de la poudre grasse selon l'invention telle que définie dans la revendication 10, comprenant
la dispersion de la poudre grasse dans la phase aqueuse de la boisson.

13. Procédé de fabrication de la boisson selon l'invention à partir de l'émulsion selon l'invention telle que définie dans la revendication 11, comprenant le rassemblement de l'émulsion avec la phase aqueuse encore manquante.

14. Utilisation d'un hydrocolloïde, qui est un mélange de gellane et de pectine, pour le ralentissement ou l'inhibition du dépôt d'un précipité de la phase huile ou matière grasse dans une boisson, qui est une émulsion huile dans eau, la boisson et la phase huile ou matière grasse étant de préférence une boisson et une phase huile ou matière grasse telles que définies dans l'une quelconque des revendications précédentes.

15. Utilisation selon la revendication 14, dans laquelle l'hydrocolloïde est un mélange de gellane et de pectine en un rapport en masse de 1:10 à 10:1.
